# EUROPEAN PATENT APPLICATION

(11) **EP 4 560 494 A1**
(43) Date of publication of application: **28.05.2025**
(21) Application number: 23211986.7
(22) Date of filing: 24.11.2023
(51) Int. Cl.: G06F 16/901, G06N 3/00

(54) **METHOD AND CONTROLLER FOR GENERATING A PREDICTIVE MAINTENANCE ALERT**

(71) Applicant: Siemens Aktiengesellschaft, 80333 München (DE)
(72) Inventor: Himmelhuber, Anna, 80339 München (DE)
(74) Representative: Siemens Patent Attorneys

(57) **Abstract**

A graph (G) has nodes (V) which represent entities of the industrial system (SYS) and edges (E) representing relations between the entities of the industrial system (SYS). A graph neural network (GNN) processing the graph (G) calculates a class prediction (P) for at least one entity of said industrial system (SYS). A sub-symbolic explainer (GNN-EXP) processes the class prediction (P) to identify edges (E) between nodes (V) and associated features (X) of nodes (V) belonging to a sub-graph (SG) within the graph (G) having influenced the class prediction (P). A large language model (LLM), equipped with a plugin (PL) for accessing the graph (G) and receiving a prompt (PR) including the sub-graph (SG), transforms the sub-graph (SG) into a maintenance justification (MJ) in natural language. A user interface (UI) outputs a predictive maintenance alert (PMA) along with the maintenance justification (MJ). As a result, the domain experts or operators of the plant can understand why a failure will occur and act accordingly. The natural language explanations reduce the cognitive workload, improve the transparency and trustworthiness of the maintenance process greatly, and can also add additional context not given by the graph neural network.

## Description

The invention relates to a computer-implemented method and a controller used for generating a predictive maintenance alert to perform a maintenance action concerning an entity of an industrial system such as a production system.

An industrial system can comprise a plurality of technical entities which relate to each other. These entities can comprise components or equipment of the industrial system. The industrial system can be represented by a graph comprising nodes representing entities of the industrial system and edges representing relations between the entities of the respective industrial system.

Machine failures can have an adverse impact on the operational efficiency of any production process, leading to long and unplanned downtimes, broken machines, etc. Therefore, knowing and preventing failures well ahead helps to increase production and cost efficiency.

Preventive maintenance describes a scheme where machines are maintained in fixed, manually scheduled intervals. It is the de-facto standard in many industries. This practice relies on visual inspection, along with routine machinery health checks. However, since the maintenance intervals tend to be agnostic towards the working condition and health status of the machine, they are rarely timed optimally and do not target specific components that actually require maintenance. That is why preventive maintenance may take up a tremendous amount of resources and time and can lead to unnecessary interruptions if the maintenance is scheduled too late or too early.

Predictive maintenance describes a practice where a method of preventing the failure of expensive manufacturing or operational equipment is employed. The idea is often to analyze data throughout the production to pinpoint unusual behavior ahead of time to avoid machine downtime by taking appropriate measures early. Additional explanations are valuable for expensive machinery when predictive maintenance is not real-time critical, i.e., the human operator still has time to make an informed decision. Predictive maintenance is considered to be one of the major driving forces for increasing efficiency and stability of manufacturing processes and, therefore, one of the ways to achieve just-in-time production.

While maintenance events can in principle be triggered based on personal assessment (e.g., based on experience or domain expertise), such unstructured procedures do not scale to the massive data that is commonly collected in modern manufacturing processes. The context of the machine is generally important and should be considered in the prediction process. The importance becomes particularly evident when training models over a fleet of machines that are connected through context information.

An example of sub-symbolic machine learning algorithms used for predictive maintenance are graph neural networks (GNNs). A graph neural network GNN is a type of neural network which directly operates on the graph structure of a graph. Graph neural networks GNNs are connectionist models that can capture a dependence of these graphs via so-called message passing between the nodes of the graphs. Unlike conventional neural networks, graph neural networks GNNs retain a state that can represent information from a node's neighborhood with arbitrary depth and can also incorporate node feature information. Graph neural networks GNNs can be used among industrial applications or systems for predictive maintenance. Graph neural networks GNNs can be used to predict machine failures in a factory monitoring setting.

Graph neural networks GNNs can be implemented to predict machine failures to trigger maintenance actions thus increasing the production efficiency of the factory. However, the use of a graph neural network GNN for predictive maintenance has the disadvantage that for a user such as an operator of the factory it is hardly possible to comprehend what did contribute to a particular prediction output by the graph neural network GNN.

A graph neural network GNN can be classified as an opaque machine learning system, where mechanisms mapping inputs to outputs are invisible to a user, also known as a 'black box' model. Through the increasing popularity and need for explainability in AI, a variety of explainable models for graph neural networks GNNs have been developed. Explainability is considered a prerequisite for building trust and adoption of AI systems especially in production systems, which require reliability, safety, and fairness.

These explainable models include surrogate models which form interpretable models that are trained to approximate the predictions of the graph neural network GNN. Other conventional approaches include the identification of most relevant features. These approaches can be described as comprehensible models which usually do emit symbols along with the output. These symbols, which are most often words, but can also be visualizations, allow a user to relate properties of the inputs to their output. However, conventional approaches for explainable GNN models do produce explanations that are hard to understand for a user in lack of context and explicit causality. All these conventional systems have in common that a user is responsible for compiling and comprehending the symbols in a final step, relying on his or her own implicit form of knowledge and reasoning about them which often are not sufficient, in particular if the user is not a domain expert and because of a personal bias of the user.

Maintenance practices can be categorized into three main types: reactive maintenance, preventive maintenance, and predictive maintenance.

Reactive maintenance involves repairing equipment after it has already broken down, aiming to restore it to its normal operating condition. On the other hand, preventive maintenance refers to regular maintenance performed on machinery while it is still functioning properly. This proactive conventional approach reduces the likelihood of equipment failure, thus preventing the need for reactive maintenance.

Predictive maintenance takes a more advanced approach by estimating the optimal timing for maintenance tasks. The goal is to minimize maintenance frequency and maximize reliability without incurring unnecessary costs. Various techniques are used for predictive maintenance, including manually generated rules/heuristics, physical simulations, and machine learning models. However, traditional machine learning models, such as deep learning, often suffer from the "black box" problem, while linear models have limited expressivity. These limitations can hinder their effectiveness in predictive maintenance applications.

More data-driven maintenance predictors such as GNNs which operate in a supervised setting may lead to a higher accuracy. But their non-transparent nature can make it hard to interpret the predictions; and biases or flaws in the underlying data or model may stay undetected and lead to unforeseen failures or unnecessary downtimes.

While the emergence of explainable AI (XAI) is positive, most explainer models for GNNs are built for AI experts rather than the intended user of the AI, such as domain experts. In order for the explainer models to succeed, properties that are focused more on the user needs should be considered. No conclusive evidence has been reached, that feature-based explanations such as importance scores have a meaningful impact on user decision accuracy. Even data scientists have been shown to over-trust XAI, not being able to accurately describe visual feature-based explanations provided.

Inspiration from experiments on human psychology or cognitive science, e.g., dual-process theories, provides an approach to reduce subjectivity of understanding. Dual-process theory divides the information processing of humans into two systems, an intuitive system and an analytical thinking system. The analytical thinking system relies on careful, cognitively demanding reasoning, making humans resort to the intuitive system. Since mental shortcuts are used here, the intuitive system is susceptible to cognitive biases. These biases can also be present when interpreting XAI, where users are unlikely to carefully consider every bit of the explanation. E.g., it has been shown that users are vulnerable to anchoring bias, mentally sticking to model behaviors that were observed early on and associating a numerical presentation of explanations with intelligence and algorithmic thinking. This is more likely to happen, when the user lacks the ability to understand the explanation indepth. It has been shown that non-experts gain less from XAI compared to AI experts, which would be the case for maintenance engineers.

Accordingly, it is an object of the present invention to provide a computer-implemented method for generating a predictive maintenance alert to perform a maintenance action which overcomes inefficiencies of a conventional predictive maintenance system.

The objectives of the invention are solved by the independent claims. Further advantageous arrangements and embodiments of the invention are set forth in the respective dependent claims.

According to the computer-implemented method for generating a predictive maintenance alert to perform a maintenance action concerning an entity of an industrial system, the following operations are performed by components, wherein the components are hardware components and/or software components executed by one or more processors:
- storing, by a graph database in a memory, a graph, said graph having nodes which represent entities of the industrial system and having edges representing relations between the entities of said industrial system;
- calculating, by a graph neural network processing the graph, a class prediction for at least one entity of said industrial system represented by an associated node;
- processing, by a sub-symbolic explainer, the class prediction, to identify edges between nodes and associated features of nodes belonging to a sub-graph within the graph having influenced the class prediction;
- transforming, by a large language model equipped with a plugin for accessing the graph and receiving a prompt including the sub-graph, the sub-graph into a maintenance justification in natural language; and
- outputting, by a user interface, a predictive maintenance alert along with the maintenance justification.

The controller of an industrial system is adapted to execute the method to generate a predictive maintenance alert and adapted to automatically trigger a maintenance action at an entity of the industrial system, wherein the entity is a machine in a production facility.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices, or any other communication devices that can process data with computer support, processors, and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and controller, or at least some of their embodiments, provide a model that is more expressive than simple heuristics (e.g., based on thresholds for sensor signals) that trigger maintenance events. As a result, the method and controller, or at least some of their embodiments, can detect various kinds of abnormalities with the help of modern, sub-symbolic machine learning algorithms. While many popular learning methods such as deep learning techniques suffer from the black box problem in the sense that the user (e.g., an operator of a plant) can hardly comprehend what contributed to a particular prediction, the method and controller, or at least some of their embodiments, overcome these inefficiencies of predicting and explaining machine failures.

The method and controller, or at least some of their embodiments, provide an explainable predictive maintenance alert generator through combining sub-symbolic explainers with large language models in order to create natural language explanations. Leveraging textual explanations reduces the cognitive workload and therefore provides more understandable alerts, especially if the explanations are in natural language.

The method and controller, or at least some of their embodiments, align graph neural network maintenance alerts, graph neural network XAI, and large language models, thereby reducing the need for further interpretation of the maintenance alert by the user when basing a maintenance decision on the graph neural network prediction.

The method and controller, or at least some of their embodiments, allow for the use of a powerful data-driven maintenance predictor, the graph neural network, which operates in a supervised setting. However, its non-transparent nature makes it hard to interpret the predictions; and biases or flaws in the underlying data or model may stay undetected and lead to unforeseen failures or unnecessary downtimes. The method and controller, or at least some of their embodiments, address these issues by providing rationale for automated decisions which in turn reduces unnecessary downtimes by predicting maintenance needs before the equipment breaks down, providing an explanation for the prediction and therefore increasing trustworthiness.

As a result, the domain experts or operators of the plant can understand why a failure will occur and act accordingly. The natural language explanations improve the transparency and trustworthiness of the maintenance process greatly and can also add additional context not given by the graph neural network.

Modern industrial AI solutions, especially in production and manufacturing systems, typically require an integrative approach where information from disparate sources is reconciled to prepare the required input data and training data. The complexities of this data integration and reconciliation process can lead to errors. Without model transparency, one must rely solely on (potentially flawed) cross validation strategies to gain confidence in the model's performance. With model transparency, the domain expert is able to identify, and more rapidly correct errors introduced by mistakes in data preparation.

In an embodiment of the method, the graph neural network receives as input a feature vector for every node of the stored graph summarized in a feature matrix and a representative description of the link structure of the graph in the form of an adjacency matrix.

In another embodiment of the method, the sub-symbolic explainer outputs a binary edge mask which masks out unimportant edges with respect to edges which are of higher importance in the graph, and a binary node feature mask which masks out unimportant features of nodes with respect to features of nodes which are of higher importance within the graph.

In another embodiment of the method, the graph neural network comprises a Graph Convolutional Network, a Graph Attention Network or a Gated Graph Neural Network.

In another embodiment of the method, the calculating operation comprises calculating class predictions for a set of entities of the industrial system. The processing operation, the transforming operation, and the outputting operation are executed for each entity in the set of entities, if the calculated class prediction for that entity belongs to a predefined maintenance relevant class.

In another embodiment of the method, the processing operation comprises outputting, by the sub-symbolic explainer, an importance score for each edge of the sub-graph. The prompt includes the importance scores. The maintenance justification reflects on the importance scores.

In another embodiment of the method, the at least one entity is a machine, and the industrial system is a production facility.

In another embodiment of the method, the maintenance justification contains statements regarding triples that form the sub-graph.

In another embodiment of the method, the statements in the maintenance justification are sorted in importance by the importance score.

An embodiment of the method comprises the initial operation of training the graph neural network in a supervised learning process on training and testing data to perform a classification task.

In an embodiment of the controller, the controller is connected to a local or remote user interface adapted to output the predictive maintenance alert along with the maintenance justification.

The computer program product comprising instructions which, when the program is executed by a computer, cause the computer to carry out a method according to one of the method claims.

The provisioning device for the computer program product according to the preceding claim, wherein the provisioning device stores and/or provides the computer program product.

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows a schematic diagram of an overall framework for illustrating a possible embodiment,
- Fig. 4: shows an exemplary graph for illustrating the operation of a possible embodiment,
- Fig. 5: shows another exemplary graph for illustrating the operation of a possible embodiment,
- Fig. 6: shows a flowchart of a possible exemplary embodiment used for generating a predictive maintenance alert.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

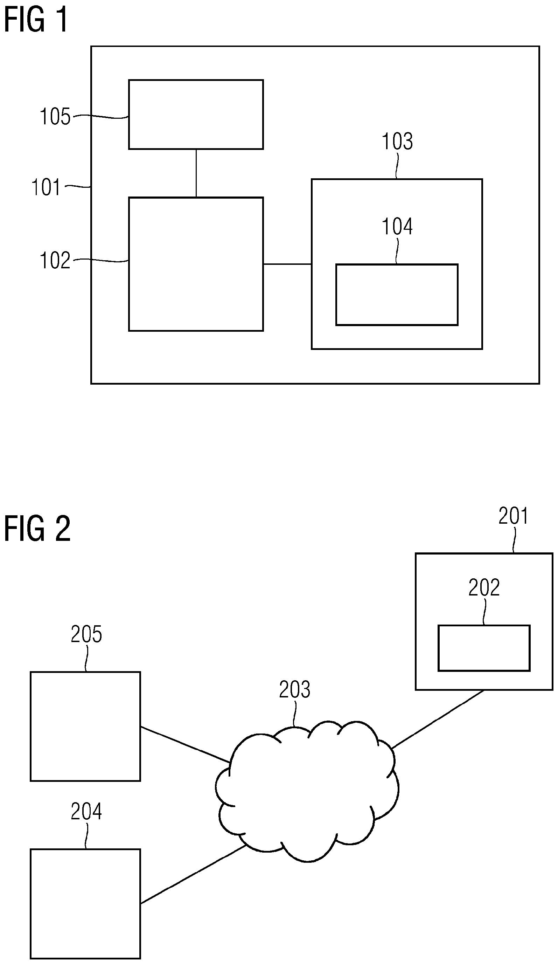

Fig. 1 shows one sample structure for computer-implementation of the invention which comprises:
- (101): computer system
- (102): processor
- (103): memory
- (104): computer program (product)
- (105): user interface

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:
- (201): provisioning device
- (202): computer program (product)
- (203): computer network/Internet
- (204): computer system
- (205): mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

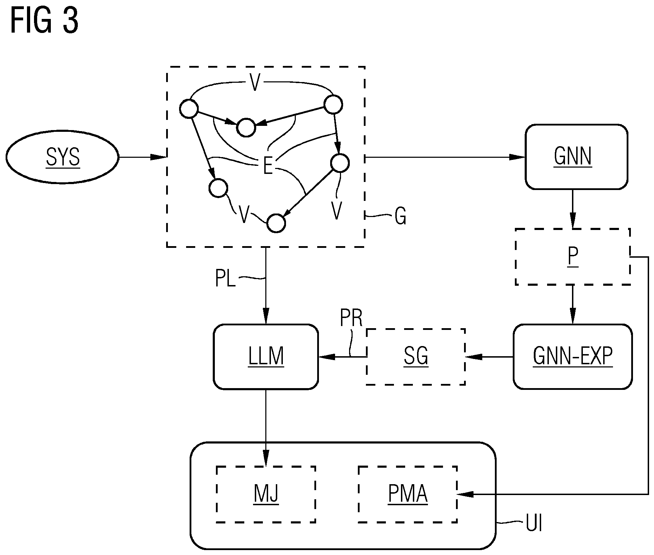

Preferably, the embodiments shown in Figs. 3 to 6 can be implemented with a structure as shown in Fig. 1 or Fig. 2.

The embodiments described in the following are based on the classification of equipment failures through graph neural networks (GNNs). Failures could be, e.g., a defect of a machine, a congestion on the conveyor belt, or a crack in a device. During the production process, the status of the plant and equipment is recorded in regular intervals along with the information if a failure occurs. In case a failure occurs, all information regarding the failure is also recorded. The term "event" refers to information at a specific timestamp. The embodiments described in the following employ a graph neural network (GNN) to perform graph or node classifications tasks (e.g., a graph detailing a machine predicted as a failure risk) or link prediction (e.g., device is predicted to have a link to a crack).

Fig. 3 shows a schematic diagram of an overall framework for illustrating a possible embodiment of the method. The embodiment illustrated in Fig. 3 is used for generating a predictive maintenance alert PMA to perform a maintenance action concerning an entity of an industrial system SYS.

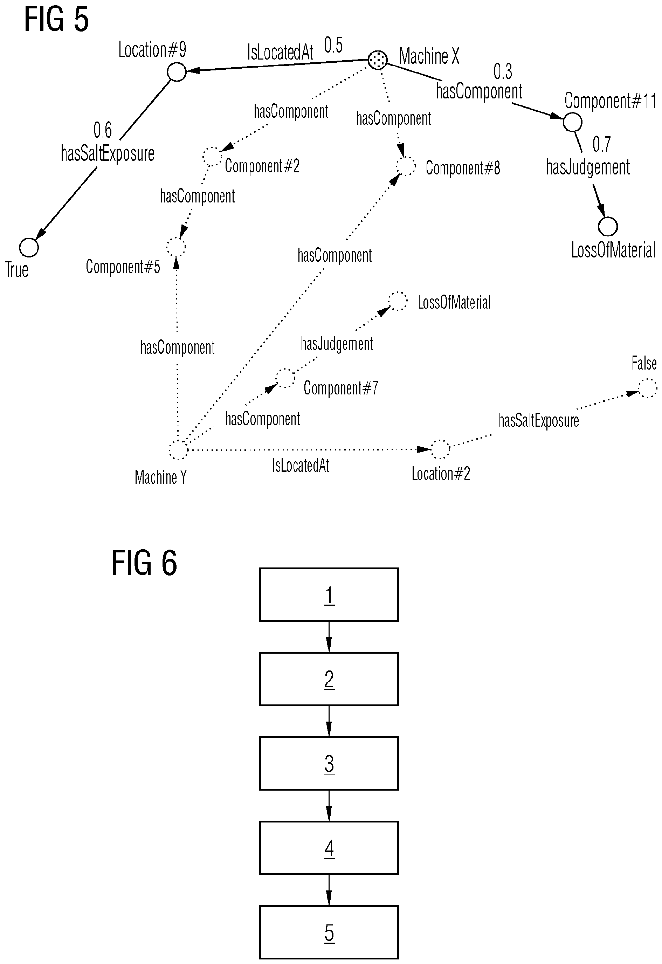

Fig. 6 shows a flowchart of a possible exemplary embodiment, which includes a storing operation 1, a calculation operation 2, a processing operation 3, a transforming operation 4, and an outputting operation 5. Referring now to Fig. 3, these operations will be described in more detail.

In the storing operation, a graph G is stored in a graph database in a memory. The memory can comprise a local data memory or a remote database. An industrial system SYS is represented by the graph G. The graph G has nodes V which represent entities of the industrial system SYS and has edges E representing relations between entities of such an industrial system SYS. The industrial system SYS can be for instance a production system comprising several machines in a production facility.

In a preferable embodiment, the memory also stores features X which can also be part of the graph G. For example, the features X can be additional nodes in the graph G that characterize, if linked, the nodes V that represent the entities of the industrial system.

In the calculating operation, the graph G is processed by a trained graph neural network GNN to calculate at least one class prediction P for at least one entity of said industrial system SYS represented by an associated node V of the graph G.

For example, class predictions can be calculated for a preselected subset of entities that are likely to require maintenance, for all entities of a certain class (e.g., rotating equipment), or for all machines in the industrial system SYS.

In the processing operation, the calculated class prediction P is processed by a sub-symbolic explainer GNN-EXP to identify edges E between nodes V and associated features X of nodes V belonging to a sub-graph SG within the graph G having significantly influenced the calculated class prediction P. In a possible embodiment, the sub-symbolic explainer GNN-EXP can be the one as described in Ying, Z., Bourgeois, D., You, J., Zitnik, M., Leskovec, J.: GNNExplainer: Generating Explanations for Graph Neural Networks. In: Advances in neural information processing systems, pp. 9244-9255 (2019). The entire contents of that document are incorporated herein by reference.

The method according to the present invention can also work with other explainer subgraph generation methods. A reason to use sub-symbolic methods (e.g., GNNs) over symbolic methods for classification is the usually higher achieved accuracy and scalability. Additionally, a reasonable high accuracy is a prerequisite for learning meaningful explanations.

In a first variant of the current embodiment, the processing operation comprises outputting, by the sub-symbolic explainer GNN-EXP, an importance score for each edge of the sub-graph SG.

In the transforming operation, a large language model LLM equipped with a plugin PL for accessing the graph G and receiving a prompt PR including the sub-graph SG, transforms the sub-graph SG into a maintenance justification MJ in natural language.

The large language model LLM is for example ChatGPT. The plugin PL is a graph database plug-in. The prompt PR triggers the large language model LLM to transform the sub-graph SG into the maintenance justification MJ, which is an explanation in natural language.

In the above-mentioned first variant of the current embodiment, the prompt PR includes the importance scores. The maintenance justification MJ reflects on the importance scores.

In the outputting operation, a predictive maintenance alert PMA is generated, if the calculated class prediction P belongs to a predefined maintenance relevant class, wherein the predictive maintenance alert PMA is output by a user interface UI along with the maintenance justification MJ.

The graph neutral network GNN can be run and updated routinely, whenever new additional data is available. In case that the class prediction P warrants a maintenance action, for instance if a production machine is classified as "high-failure risk", the predictive maintenance alert PMA can be output via the user interface UI to a user. The user interface UI can comprise a local interface at the site of the industrial system SYS or a remote interface connected via a data network. The predictive maintenance alert PMA can be generated automatically if the calculated class prediction P does belong to a predefined maintenance relevant class. The predictive maintenance alert PMA is output via the user interface UI along with the maintenance justification MJ.

A user or expert such as an operator of the production plant can analyze the predictive maintenance alert PMA along with the generated maintenance justification MJ. If the analysis indicates that the predictive maintenance alert PMA is trustworthy, a corresponding maintenance action can be automatically triggered, and an associated maintenance schedule can be adjusted accordingly. In case that the maintenance justification MJ is found to be insufficient, the observation can be flagged for further analysis. A contradicting maintenance justification MJ may indicate a possibly wrong classification result of the graph neutral network GNN indicating a need for retraining the graph neural network GNN. The maintenance justifications MJ output via the user interface UI are helpful to detect biases or flaws in the underlying data or model which potentially can lead to unforeseen failures and unnecessary downtimes of the industrial system SYS.

The current embodiment provides rationale for automated decisions and automated predictive maintenance alerts PMA which in turn reduces unnecessary downtimes of the supervised industrial system SYS by predicting required maintenance before the equipment of the industrial system SYS breaks down. Further, the current embodiment provides automatically for possible explanations for the predictive maintenance alerts PMA thus increasing trustworthiness of the system. The maintenance justifications can improve the transparency and trustworthiness of the maintenance process for maintaining equipment of the industrial system SYS. Possible failures can be identified more accurately and rapidly. In this way, the total efficiency of the industrial system SYS is increased, including, for example, its production efficiency.

The method as illustrated in the flowchart of Fig. 6 can be implemented with a program executed on a processor of a controller of the industrial system SYS. The controller can execute the method to automatically generate a predictive maintenance alert PMA adapted to trigger a maintenance action at a specific entity of the monitored industrial system SYS. The controller can be connected to a local or remote user interface UI adapted to output the predictive maintenance alert PMA along with at least one maintenance justification MJ.

At least some of the embodiments can be executed in real time during operation of the monitored industrial system SYS such as a production facility. The predictive maintenance alert PMA can automatically trigger the generation of control signals involved in a maintenance process derived from the predictive maintenance alert PMA. For instance, if an entity of the industrial system SYS is found to have a high-failure risk, the entity can be automatically shut down for inspection or repair.

Each entity of the industrial system SYS can be represented by an associated node V within the graph G. Corresponding features can for instance comprise the age of a machine or a type of the machine represented by a node V in the graph G. Other exemplary entities of the industrial system SYS may also comprise sensors forming specific entities of the industrial system SYS. The described embodiments can be used for any kind of industrial system SYS in different technical domains. Depending on the use case, different kinds of graph neutral networks GNNs can be used in the framework illustrated in Fig. 3.

According to a current embodiment, for the graph neural network GNN as shown in Fig. 3, the goal is to learn a function of features on a graph G = (V,E) with edges E and nodes V. The input to the graph neural network GNN is comprised of a feature vector xi for every node i, summarized in a N×D feature matrix X and a representative description of the link structure in the form of an adjacency matrix A.

In other words, the graph neural network GNN receives as an input a feature vector for every node V of the graph G summarized in the feature matrix X and a representative description of the graph G in the form of the adjacency matrix A. The graph G represents the industrial system SYS having entities such as equipment and components of the industrial system SYS. The graph neural network GNN is trained in a training process, in particular in a supervised learning training process. The graph neural network GNN can operate directly on the graph structure of the graph G. The graph neural network GNN can be used to perform a classification task. For instance, every node V in the graph G can be associated with the label and the graph neural network GNN can be used to label the nodes V without ground truth. The graph neural network GNN can comprise several layers. A layer update of the graph neural network GNN involves typically three key computations. In a first computation, the graph neural network GNN computes neural messages between every pair of nodes V. In a second computation, the graph neural network GNN aggregates messages from neighboring nodes and calculates an aggregated message. Finally, the graph neural network GNN takes in a third key computation the aggregated message along nodes representation from the previous layer and transforms it non-linearly to obtain nodes representations at the next layer. The computations are performed at every layer of the graph neural network GNN. To predict a label of a node V, one can pass the node embeddings through a standard classification network such as a multilayer perceptron MLP with a Softmax output layer.

The graph neural network GNN provides at least one decision formed by a calculated class prediction P. In other words, the output of the graph neural network GNN can comprise predictive class labels. The class prediction P of the graph neural network GNN is supplied to a sub-symbolic explainer GNN-EXP as illustrated in Fig. 3. The sub-symbolic explainer GNN-EXP takes the graph neural network and its predictions as input, and returns an explanation in the form of a small sub-graph SG of the graph G together with a small subset of node features that are most influential for the class prediction P. For their selection, the mutual information between the class prediction P of the graph neural network GNN and the distribution of possible sub-graph SG structures can be maximized. The output of the sub-symbolic explainer GNN-EXP can comprise an edge mask M_{E} and a node feature mask M_{X}. These form binary masks and identify the most influential information in the receptive field of the graph neural network GNN.

For example, the sub-symbolic explainer GNN-EXP outputs a binary edge mask M_{E} which does mask out unimportant edges of the graph G. The sub-symbolic explainer GNN-EXP can further output a binary node feature mask M_{X} which masks out unimportant features of nodes within the graph G. These two masks define in combination the sub-graph SG that is the output of the sub-symbolic explainer GNN-EXP. In the above mentioned first variant, the sub-symbolic explainer GNN-EXP also outputs an importance score for each edge of the sub-graph SG.

The sub-symbolic explainer GNN-EXP illustrated in Fig. 3 can comprise a computer-implemented software tool for explaining predictions made by the graph neural network GNN. Given the trained graph neural network GNN model with an instance as its input, the sub-symbolic explainer GNN-EXP does produce an explanation of the class prediction P via a compact sub-graph SG structure as well as a set of feature dimensions important for its class prediction P. The sub-symbolic explainer GNN-EXP can specify an explanation as a rich sub-graph SG of the entire graph G the graph neural network GNN was trained on such that the sub-graph SG maximizes the mutual information with the class predictions P of the graph neural network GNN.

This can be achieved in a possible implementation by formulating a mean field variational approximation and by learning a real valued graph mask which selects the important sub-graph SG of the graph neural network GNN's computation graph. Simultaneously, the sub-symbolic explainer GNN-EXP can also learn a feature mask M_{X} that masks out unimportant node features. Given an instance, the sub-symbolic explainer GNN-EXP can identify a compact sub-graph SG structure and a small subset of node features that play a crucial role in the graph neural network GNN's class prediction P. Further, the sub-symbolic explainer GNN-EXP can generate consistent and concise explanations for an entire class of instances. The output of the sub-symbolic explainer GNN-EXP is supplied to the large language model LLM as described above.

Initially, the graph neural network GNN is trained on and applied to training and testing data and subsequently the sub-symbolic explainer GNN-EXP is applied to the generated class predictions P, as can be seen in Fig. 3.

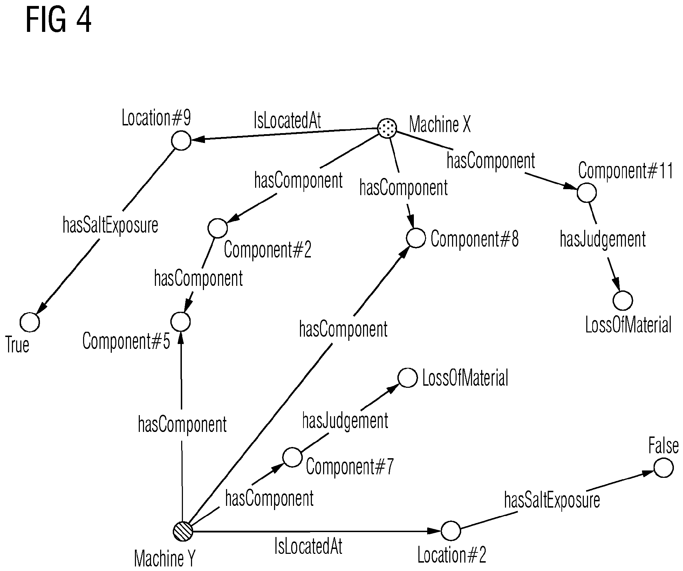

Fig. 4 shows an exemplary graph G of a production facility having a first machine X and a second machine Y. The first machine X is located at location#9 that is exposed to salt. Furthermore, it has as a component component#2 which in turn has as a component component#5. The first machine X has as also a further component component#8. Component#5 is also a component of the second machine Y of the production facility. The second machine Y has as a further component component#7 which is judged as having loss of material. The graph G illustrated in Fig. 4 can be supplied as input to the graph neutral network GNN to perform a classification task. For example, the first machine X can be classified by the GNN as having "a high failure risk" and the second machine Y as having "a low failure risk".

Fig. 5 shows a sub-symbolic explanation in the form of a sub-graph, explaining why the first machine X has been classified by the GNN as having "a high failure risk". The sub-graph shown in Fig. 5 is the output of the sub-symbolic explainer GNN-EXP. Fig. 5 depicts nodes and edges not considered important by the sub-symbolic explainer GNN-EXP with dotted lines, i.e., the nodes and edges depicted with dotted lines do not belong to the sub-graph. Furthermore, Fig. 5 also shows the importance scores attached to the edges as an additional output of the sub-symbolic explainer GNN-EXP, in accordance with the above-mentioned first variant.

As shown in Fig. 3, the large language model LLM receives a prompt PR including the sub-graph SG and the importance scores of the edges shown in Fig. 5. An example for the prompt PR would be:
"Create an explanation for `Machine X classified as high failure' with remaining subgraph along with the importance scores as reasons. The importance score shows the importance of the triple for the explanation."

The large language model LLM shown in Fig. 3 then transforms the sub-graph SG shown in Fig. 5 into the maintenance justification MJ.

The maintenance justification MJ gives an explanation in natural language given the sub-graph SG and the importance scores of its edges.

An example for the maintenance justification MJ would be:
"Machine X is classified as a high failure risk due to several contributing factors. The first factor is that Machine X has Component#11, which carries a score of 0.3. This indicates that Component#11 is associated with a higher likelihood of failure, making Machine X more susceptible to malfunctions or breakdowns. Furthermore Component#11 is judged to have loss of material, which has a score of 0.7. This high score suggests that the loss of material may increase the probability of Machine X to fail. Furthermore, Machine X is located at Location#9, which has a score of 0.5. The location of a machine plays a significant role in its overall performance and failure rates. In this case, the high score suggests that Location#9 has conditions or characteristics that may increase the chances of machine failure. Lastly, Location#9 has a high salt exposure, as denoted by the triple "Location#9 hasSaltExposure True" with a score of 0.6. Salt exposure can be particularly detrimental to machinery, as it can lead to corrosion, rust, and other forms of damage. The high score indicates that the level of salt exposure in Location#9 is substantial, further contributing to the classification of Machine X as a high failure risk.

In summary, Machine X's classification as a high failure risk is primarily attributed to the presence of Component#11 with the judgement of loss of material, its location at Location#9, and the significant salt exposure in that location. These factors collectively contribute to the increased probability of failure for Machine X."

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

Independent of the grammatical term usage, individuals with male, female or other gender identities are included within the term.

## Claims

1. A computer-implemented method for generating a predictive maintenance alert (PMA) to perform a maintenance action concerning an entity of an industrial system (SYS), wherein the following operations are performed by components, and wherein the components are hardware components and/or software components executed by one or more processors:
- storing (1), by a graph database in a memory, a graph (G), said graph (G) having nodes (V) which represent entities of the industrial system (SYS) and having edges (E) representing relations between the entities of said industrial system (SYS);
- calculating (2), by a graph neural network (GNN) processing the graph (G), a class prediction (P) for at least one entity of said industrial system (SYS) represented by an associated node (V);
- processing (3), by a sub-symbolic explainer (GNN-EXP), the class prediction (P), to identify edges (E) between nodes (V) and associated features (X) of nodes (V) belonging to a sub-graph (SG) within the graph (G) having influenced the class prediction (P);
- transforming (4), by a large language model (LLM) equipped with a plugin (PL) for accessing the graph (G) and receiving a prompt (PR) including the sub-graph (SG), the sub-graph (SG) into a maintenance justification (MJ) in natural language; and
- outputting (5), by a user interface (UI), a predictive maintenance alert (PMA) along with the maintenance justification (MJ).

2. The method according to claim 1,
- wherein the graph neural network (GNN) receives as input a feature vector for every node (V) of the stored graph (G) summarized in a feature matrix (X) and a representative description of the link structure of the graph (G) in the form of an adjacency matrix (A).

3. The method according to claim 1 or 2,
wherein the sub-symbolic explainer (GNN-EXP) outputs
- a binary edge mask (M_{E}) which masks out unimportant edges with respect to edges which are of higher importance in the graph (G), and
- a binary node feature mask (M_{X}) which masks out unimportant features of nodes with respect to features of nodes which are of higher importance within the graph (G) .

4. The method according to any of the preceding claims,
- wherein the graph neural network (GNN) comprises a Graph Convolutional Network (GCN), a Graph Attention Network (GAT) or a Gated Graph Neural Network (GGNN).

5. The method according to any of the preceding claims,
- wherein the calculating operation (2) comprises calculating class predictions (P) for a set of entities of the industrial system (SYS); and
- wherein the processing operation (3), the transforming operation (4), and the outputting operation (5) are executed for each entity in the set of entities, if the calculated class prediction (P) for that entity belongs to a predefined maintenance relevant class.

6. The method according to any of the preceding claims,
- wherein the processing operation (3) comprises outputting, by the sub-symbolic explainer (GNN-EXP), an importance score for each edge (E) of the sub-graph (SG),
- wherein the prompt (PR) includes the importance scores, and
- wherein the maintenance justification (MJ) reflects on the importance scores.

7. The method according to any of the preceding claims,
- wherein the at least one entity is a machine, and the industrial system (SYS) is a production facility.

8. The method according to any of the preceding claims,
- wherein the maintenance justification (MJ) contains statements regarding triples that form the sub-graph (SG) .

9. The method according to claim 8,
- wherein the statements in the maintenance justification (MJ) are sorted in importance by the importance score.

10. The method according to any of the preceding claims, with the initial operation of
- training the graph neural network (GNN) in a supervised learning process on training and testing data to perform a classification task.

11. A controller of an industrial system
- adapted to execute the method according to one of the method claims to generate a predictive maintenance alert (PMA), and
- adapted to automatically trigger a maintenance action at an entity of the industrial system (SYS), wherein the entity is a machine in a production facility.

12. The controller according to claim 11,
- wherein the controller is connected to a local or remote user interface (UI) adapted to output the predictive maintenance alert (PMA) along with the maintenance justification (MJ).

13. A computer program product comprising instructions which, when the program is executed by a computer, cause the computer to carry out a method according to one of the method claims.

14. A provisioning device for the computer program product according to the preceding claim, wherein the provisioning device stores and/or provides the computer program product.
